# EUROPEAN PATENT APPLICATION

(11) **EP 0 860 301 A1**
(43) Date of publication of application: **26.08.1998**
(21) Application number: 98200388.1
(22) Date of filing: 09.02.1998
(51) Int. Cl.: B60B 21/06, B60B 1/04

(54) **Improvements at spoke-rim connections for spoke wheels**

(30) Priority: 21.02.1997 BE 9700163
(71) Applicant: "Alesa", "l'Alliage Léger et ses Applications" N.V., 2900 Schoten (BE)
(72) Inventor: Claes, Ivo, 8301 Knokke-Heist (BE)
(74) Representative: Donné, Eddy

(57) **Abstract**

Improvements at spoke-rim connections for spoke wheels, characterized in that, between the wheel rim (1) and each nipple (5), means (11) are provided which allow for an additional relative freedom of movement between the rim (1) and each nipple (5).

## Description

The present invention relates to improvements at spoke-rim connections for spoke wheels, such as applied in bicycles, motorbicycles, motorcycles, automobiles and similar.

More particularly are the improvements according to the invention related to means provided between the wheel rim and the nipple of each spoke, whereby these means substantially are formed of an intermediate element, respectively an intermediate sleeve.

Such means, more particularly, intermediate sleeves, according to the invention may cooperate with any spoke rim and any nipple, but in a particular case, the intermediate sleeves according to the invention will be applied for aluminium rims, more particularly, so-called hollow aluminium rims, on one hand, and, for example, nipples of the type such as described in the Belgian Patent No. 9600084, more particularly a nipple of the type which substantially consists of a body which is provided with a rounded collar, more particularly, a spherical collar, on the other hand.

Although, by means of the aforementioned known nipples, the longitudinal axis of the nipple, after tightening of the spoke, almost coincides with the longitudinal axis of the spoke, it has been found that, even if the aforementioned nipples are applied as such, not always a proper tension force directed according to the longitudinal axis of the nipple, respectively of the spoke, is obtained, but that lateral forces still are created, as a result of which the spoke is subjected to a bending force, more particularly, at the height of the extremity of the nipple, as a result of which ruptures, fractures and similar easily may occur in the spoke.

Although this known nipple generally is very efficient as it, due to its rounded, in particular spherical, collar, forms a kind of ball-and-socket joint together with its seat in the rim, whereby the nipple, axially as well as radially, obtains a very large freedom of movement, it has been found that in certain cases, for example, when the diameter of the hub flanges becomes relatively large in respect to the rim diameter, which nowadays more and more is the trend, the aforementioned disadvantage, namely, that the longitudinal axis of the nipple does not coincide with the longitudinal axis of the spoke, still occurs.

This disadvantage, which substantially is a result of the still increasing diameters of the hub flanges in respect to the diameter of the rim diameters, which in many cases even become smaller, of course will occur easier in the case that the spokes, so to say, are crossed over three spokes, which is preferred, than in the case that the spokes are crossed over two spokes.

Although the improvements according to the invention in a preferred form of embodiment make use of the aforementioned nipples with spherical collars, it is obvious that the improvements according to the invention may also be applied with any other nipple.

The present invention, then, has as its aim to provide, in combination with any nipple, but more particularly with a nipple as mentioned above, an intermediate sleeve which allows for an additional maximum freedom of movement of the spoke in respect to the wheel rim, in such a manner that also in rims with a relatively small diameter, in combination with hub flanges with a relatively large diameter, such a connection is obtained between wheel rim and spoke that the forces created in the nipple and in the spoke are directed only axially, as a result of which the risk of fractures, ruptures or similar is almost excluded.

The improvements at spoke-rim connections for spoke wheels showing the aforementioned and other advantages substantially consist in that means are provided between the wheel rim and each nipple which allow for an additional relative freedom of movement between the rim and each nipple.

The aforementioned means will be formed in a very advantageous manner by means of an intermediate sleeve which is provided between the wheel rim and each nipple.

With the intention of better showing the characteristics of the invention, as an example without any limitative character, a preferred form of embodiment of the improvements according to the invention is described hereafter, with reference to the accompanying drawings, wherein:
figure 1 represents a lateral view of a spoke wheel to which the improvements according to the invention are applied;
figure 2, to a larger scale, represents a lateral view of an intermediate sleeve according to the invention;
figure 3 represents a cross-section according to line III-III in figure 2;
figures 4 and 5, at a large scale and in two different positions, represent cross-sections of a wheel rim whereby, for the attachment of the spokes, an intermediate sleeve according to the invention is applied;
figure 6 is a view similar to that of figures 4 and 5, but whereby the wheel rim 1 is connected to the spokes 4 by means of an intermediate sleeve according to the invention;
figure 7 represents a longitudinal section of figure 6;
figure 8 is a view similar to that from figure 7;
figure 9 is a view similar to that from figure 6, but for an embodiment variant.

As known, a spoke wheel is formed by a rim 1, a hub 2 which, at each extremity, is provided with a flange 3, and spokes 4 which are attached between the wheel rim 1 and the flanges 3 of the hub 2.

Whereas the hooking on of each spoke 4 at the flanges 3 of the hub 2 is realized by a simple hooking engagement, known in itself, of the spokes 4, which are provided to this aim with a bent portion, the extremity of which has a small head, the connection between the wheel rim 1 and each spoke 4 is realized by means of a so-called nipple 5 which, at its interior, is provided with screw thread 6 and whereby in this latter the extremity 7, provided with screw thread, of a nipple 5 can be provided in order to tighten the spoke 4, by turning the nipple 4, in an appropriate manner.

With the spoke wheels known up to now, to this aim the head 8 of the nipple 5 fits into a passage 9 in the rim 1, whereby this passage 9 either is provided with a collar 10 or not, in such a manner that the head 8 of the nipple 5 obtains a certain freedom to situate itself in respect to the passage 9, respectively in respect to the collar 10, such that the tension force in the spoke 4 is directed as axially as possible.

In order to still increase, according to the present invention, the freedom of movement of the spoke 4 in respect to the passage 9, or possibly in respect to the collar 10, which is particularly interesting as the ratio between the diameter of the wheel rim and the diameter of the flanges 3 of the hub becomes smaller, according to the invention, an intermediate sleeve 11 according to the inventon shall be provided between the passage 9, or possibly the collar 10, and the head 8 of the nipple 5.

The aforementioned intermediate sleeve 11 substantially consists of a first cylindrical portion 12 which changes into a hollow spherical portion 13 which in its turn changes into an inclined portion 14 whereby this latter is prolonged by a cylindrical portion 15.

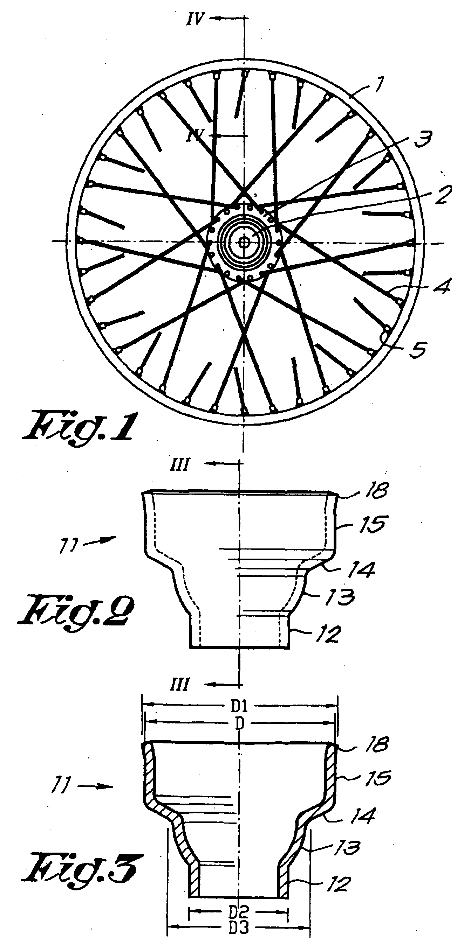

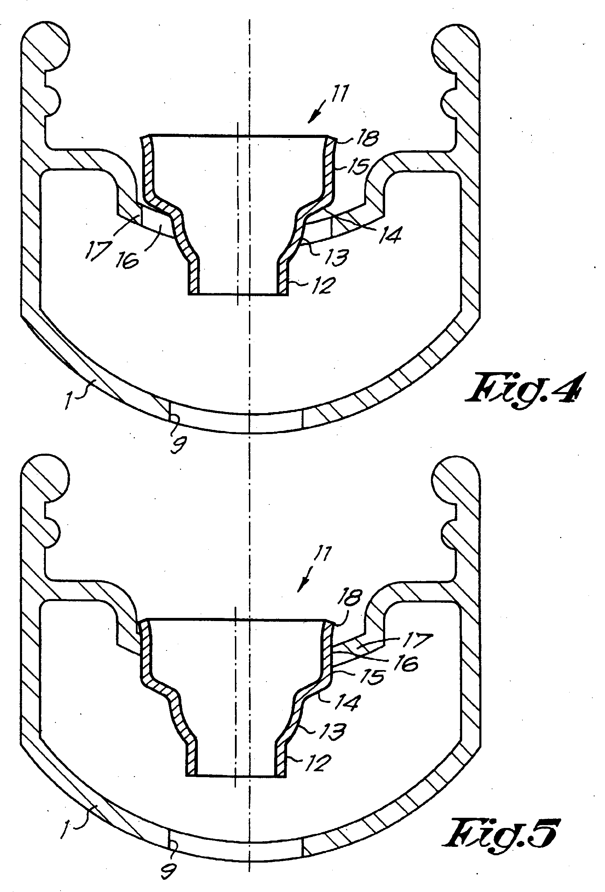

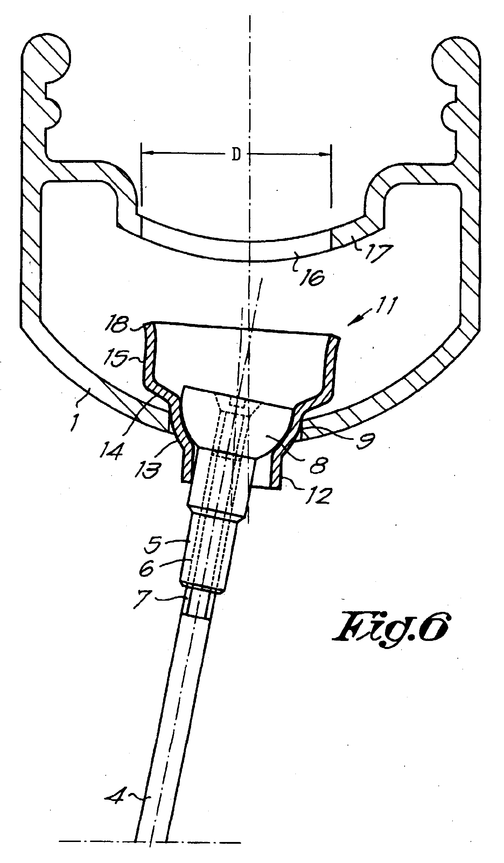

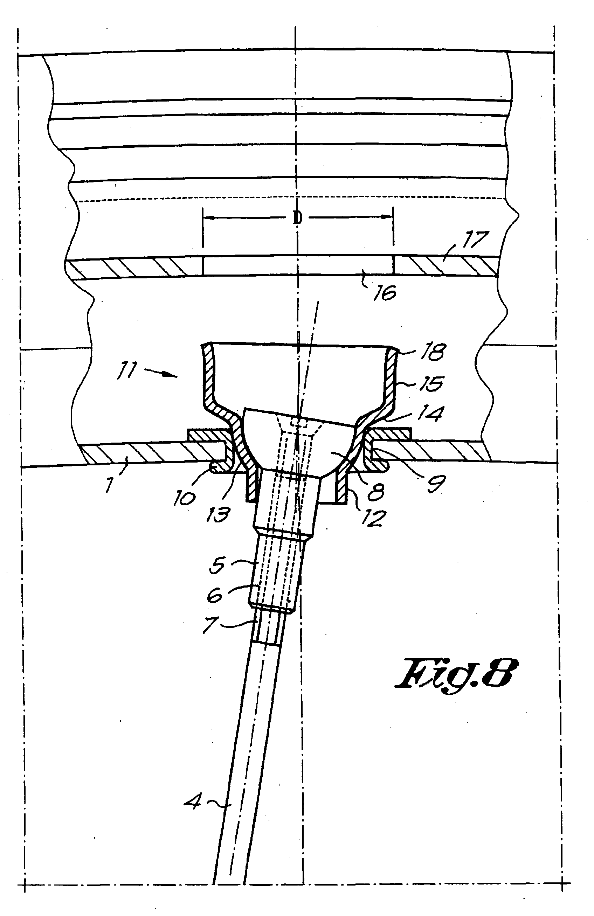

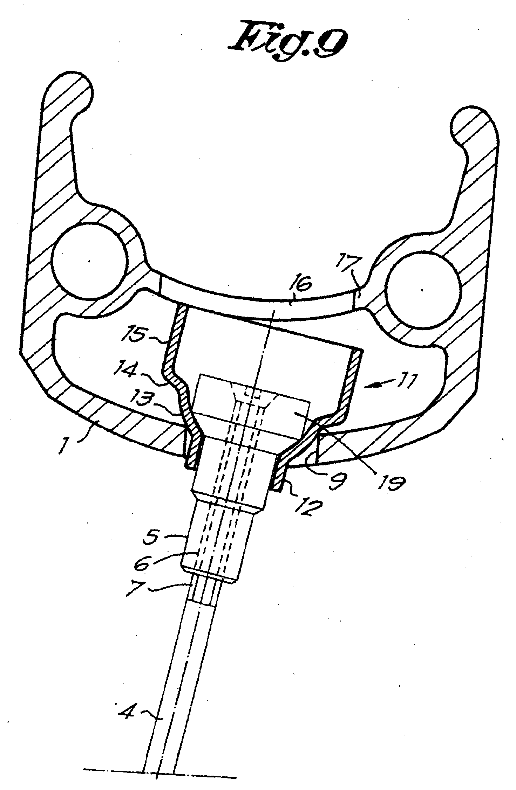

The cylindrical portion 15 has a diameter D which is equal to the diameter D of the passage 16 in the partition wall 17 of the wheel rim 1, whereby the free extremity of this cylindrical portion 15, in the form of embodiment according to figures 2 to 8, is somewhat enlarged in order to form an edge 18, the diameter D1 of which is somewhat larger than the diameter D of the passage 16, for example, an enlargement in the order of 0,1 to 0,3 mm.

The bent portion 13 of the intermediate sleeve 11 has a small diameter D2 and a large diameter D3, whereby this small diameter is smaller than the diameter of the aforementioned opening 9, respectively the inner diameter of the aforementioned collar 10, whereas the outer diameter D3 of the bent part 13 of the intermediate sleeve 11 is equal to or somewhat smaller than the diameter of the passage 9, respectively the inner diameter of the collar 10.

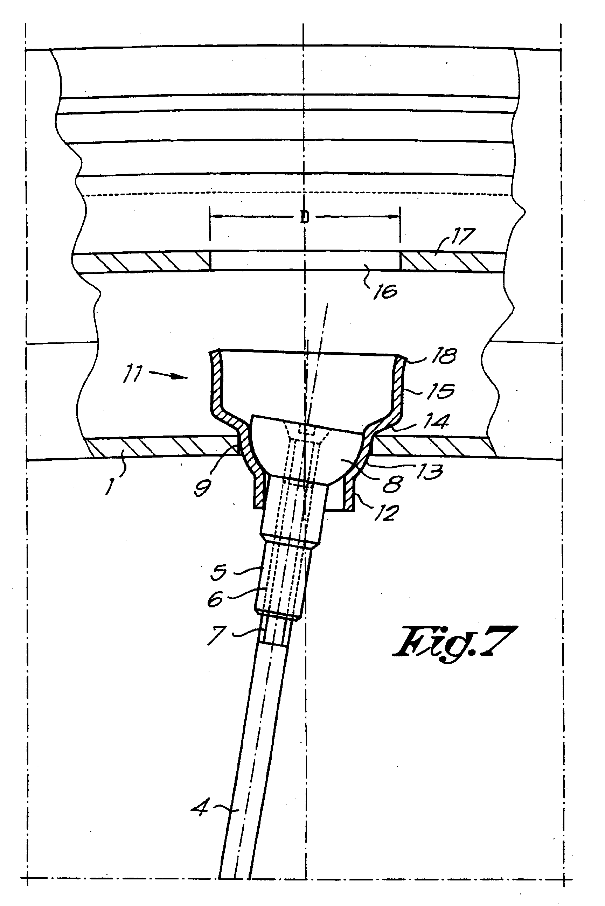

The insertion of an intermediate sleeve 11 into the wheel rim 1 is performed by bringing such intermediate sleeve, in the first place, through the passage 16 (see figure 4) up to the position as shown in figure 5, whereby the edge 18 rests upon the partition wall 17 of the rim 1.

Subsequently, such intermediate sleeve 11, for example, by pressing upon the portion 14, will be pushed through the wall 17, whereby the edge 18 is somewhat indented until it has passed the wall 17.

At that moment, the intermediate sleeve 11, with the portions 12 and 13, will have got into the passage 9, whereas the edge 18 has sprung back somewhat, as a result of which it is obtained that such intermediate sleeve will not detach itself out of the rim 1.

Subsequently, a nipple 5 is placed in the intermediate sleeve 11, to which a spoke 4, which is enganged in the flange 3 of the hub 2, is connected by screwing the nipple 5 onto the hub 4.

Subsequently, the spoke 4 is tightened by tightening the nipple 5 in an appropriate manner, whereby, due to the inclined position of the spoke 4, the nipple 5 with its spherical head 8 is displaced automatically in the spherical portion 13 of the intermediate sleeve 11, as the spoke-nipple connection will try automatically to place the nipple 5 and the spoke 4 co-axially, in order to obtain that the tension forces are transmitted axially.

When, during this tightening of a spoke 4, such an ideal condition is not achieved because, for example, the flange diameter of the hub is relatively large and/or the diameter of the wheel rim is relatively small, the intermediate sleeve 11 according to the invention begins to effect automatically.

Indeed, in such a case, the nipple 5, due to the extremely inclined position of the spoke, will act upon the intermediate sleeve 11 in such a manner that this latter, as represented in figures 6, 7 and 8, is turned in the passage 9 by the nipple 5, this due to the fact that the nipple 5, from a well-defined position, will act upon the cylindrical portion 12 of the intermediate sleeve 11, more particularly, will push this portion 12 laterally away, whereby the hollow spherical portion 13 of the intermediate sleeve 11, under the influence of the tension force exerted in the spoke 4, will search for the most appropriate position in the passage 9.

It is obvious that the edge 18 of the intermediate sleeve 11 will only be provided if such intermediate sleeves are provided already beforehand, such that these intermediate sleeves 11 cannot detach themselves out of the rim 1 by themselves.

If it is desired that the intermediate sleeve 11 only is provided during mounting the spokes 4 in the rim 1, the diameter D of the passage 16 can be chosen larger than the diameter of the cylindrical portion 15 of the intermediate sleeves 11 and can even intermediate sleeves 11 be applied showing no edge 18.

In order to show that such intermediate sleeves 11 even can be applied with equal efficiency with nipples with a non-spherical collar 8, in figure 9 an example is represented of an intermediate sleeve 11 which is combined with a nipple 5 showing a cylindrical head 19.

In this case, the body of the nipple 5 shows a transverse dimension which is approximately equal to the inner transverse dimension of the cylindrical portion 12 of an intermediate sleeve 11, in such a manner that such intermediate 11 follows the displacement of the nipple 4 promptly in order to position the nipple 5 and the spoke 4 co-axially in each other's prolongation.

In this manner, thus, it is obtained that, even in extreme cases, the spoke-nipple connection remains precisely co-axial, such that also the forces occuring therein are directed precisely co-axially and distortions of spoke and/or nipple are totally excluded, which implies that also ruptures, fractures or similar are avoided almost totally.

It is obvious that the present invention is in no way limited to the forms of embodiment described by way of example and represented in the accompanying drawings, but that the improvements according to the invention can be realized in a variety of forms and dimensions without leaving the scope of the invention.

## Claims

1. Improvements at spoke-rim connections for spoke wheels, characterized in that, between the wheel rim (1) and each nipple (5), means (11) are provided which allow for an additional relative freedom of movement between the rim (1) and each nipple (5).

2. Improvements according to claim 1, characterized in that the aforementioned means (11) are formed by an intermediate sleeve.

3. Improvements according to claim 2, characterized in that the intermediate sleeve (11) consists of, successively, a first cylindrical portion (12); an enlarged hollow spherical portion (13); an inclined portion (14); and a second cylindrical portion (15) with a larger diameter.

4. Improvements according to claim 3, characterized in that the free edge (18) of the cylindrical portion (15) is somewhat enlarged towards the outside.

5. Improvements according to any of the preceding claims, characterized in that, in the case of a hollow wheel rim, in the partition wall (17) of this rim, a passage (16) is provided the diameter D of which is equal to or somewhat larger than the diameter D of the cylindrical portion (15) of the intermediate sleeve (11).

6. Improvements according to claim 4 or 5, characterized in that the diameter D1 of the aforementioned edge (18) is somewhat larger than the diameter D of the passage (16) in the partition wall (17).

7. Improvements according to any of the preceding claims, characterized in that, in the actual wheel rim (1), a passage (9) is provided the diameter of which is larger than the diameter D2 of the intermediate sleeve (11) but is smaller than the diameter D3 of this intermediate sleeve (11).

8. Improvements according to any of the preceding claims, characterized in that the hollow spherical portion (13) of an intermediate sleeve (11) has a curvature which coincides with the curvature of the head (8) of a nipple (5).
